# FASCICULE DE BREVET EUROPEEN

(11) **EP 2 696 048 B1**
(45) Date de publication et mention de la délivrance du brevet: **28.03.2018**
(21) Numéro de dépôt: 12305990.9
(22) Date de dépôt: 09.08.2012
(51) Int. Cl.: F01N 3/20

(54) **Jaugeage de l'autonomie d'un système de stockage et de délivrance d'ammoniac gazeux**
Messung der Restkapazität eines Speicher- und Dosiersystems von gasförmigem Ammoniak
Gauging of the residual capacity of a system for the storage and delivery of gaseous ammonia

(43) Date de publication de la demande: 12.02.2014
(73) Titulaire: Aaqius & Aaqius S.A., 1207 Genève (CH)
(72) Inventeur: Dementhon, Jean-Baptiste, 75011 Paris (FR)
(74) Mandataire: Regimbeau

(56) Documents cités:
- EP-A1- 1 977 817
- EP-A1- 1 992 397
- EP-A1- 2 412 946
- EP-A1- 2 428 490
- EP-A1- 2 444 614
- WO-A1-2012/034706
- DE-A1-102008 001 004

## Description

### Domaine de l'invention

L'invention concerne d'une façon générale le stockage de l'ammoniac dans des applications de réduction des oxydes d'azote NOₓ par réduction catalytique sélective (SCR), notamment pour la réduction des émissions de polluants par les moteurs diesel.

### Etat de l'art

Les émissions de polluants liées au transport sont depuis près de trente ans un moteur de progrès de premier plan de l'industrie. L'augmentation progressive de la sévérité des limites en émission pour les quatre polluants réglementés (CO, HC, NOₓ, particules) a permis d'améliorer significativement la qualité de l'air notamment dans les grandes agglomérations.

L'utilisation toujours croissante de l'automobile nécessite de poursuivre les efforts pour réduire encore davantage ces émissions de polluants. Une diminution de la tolérance vis-à-vis des seuils d'émission Européens est attendue en 2014 dans le cadre des étapes pour l'entrée en vigueur de la norme Euro6. De telles mesures visent à réduire la pollution locale. Disposer de technologies de dépollution à forte efficacité dans toutes les conditions de roulage est ainsi un enjeu majeur pour l'industrie du transport. Dans ce contexte, la réduction des oxydes d'azote (NOₓ) en mélange pauvre, c'est-à-dire en mélange comprenant de l'oxygène en excès, représente un enjeu important associé à une problématique complexe.

Par ailleurs, la consommation de carburant, en lien direct avec les émissions de CO₂, a été propulsée en quelques années au rang de préoccupation majeure de l'automobile. Ainsi, une réglementation a été mise en place au niveau Européen à partir de 2012 sur les émissions de CO₂ des véhicules particuliers. Il est d'ores et déjà acquis que cette limite sera régulièrement abaissée au cours des décennies à venir. La réduction des émissions CO₂ s'est donc imposée comme le nouveau moteur de croissance pour toute l'industrie des transports.

Cette double problématique réduction de la pollution locale (NOₓ) et réduction de la consommation carburant (CO₂) est particulièrement difficile pour le moteur Diesel dont la combustion en mélange pauvre s'accompagne d'émissions en NOx difficile à traiter.

Dans ce contexte, la technologie de post-traitement SCR (« *selective catalytic reduction* », réduction catalytique sélective en terminologie anglo-saxonne) est utilisée aussi bien pour les véhicules particuliers que pour les véhicules affectés au transport de marchandises. Il est alors possible de positionner le moteur sur son fonctionnement optimal en rendement, les fortes émissions de NOₓ étant ensuite traitées dans l'échappement par le système SCR permettant une réduction NOₓ avec une forte efficacité.

Pour permettre la mise en place d'une telle technologie SCR il est nécessaire d'embarquer à bord du véhicule un agent réducteur nécessaire pour la réduction des oxydes d'azote. Le système actuellement retenu par les poids lourds utilise l'urée en solution aqueuse comme agent réducteur. Injecté à l'échappement, l'urée se décompose par effet de la température des gaz d'échappement en ammoniac (NH₃) et permet la réduction des NOₓ sur un catalyseur spécifique. Une solution aqueuse d'urée retenue et standardisée pour le fonctionnement des systèmes actuellement en série de SCR est référencée en AUS32 (le nom commercial en Europe étant Adblue ®).

Ce procédé très efficace souffre pourtant d'un certain nombre d'inconvénients. Il présente une efficacité à froid limitée, alors qu'une telle situation se présente dans plusieurs cas, notamment celui des bus en ville. Le réservoir d'urée présente une masse et un volume important, typiquement 15 à 30L pour un véhicule particulier, 40 à 80L pour un poids-lourds. Un tel encombrement entraîne une complexité d'intégration dans le véhicule d'autant plus importante que le véhicule est petit. Il en résulte un coût élevé de la dépollution, ainsi qu'un excédent de masse qui se fait au détriment de la consommation en carburant du véhicule et donc des émissions de CO₂.

Diverses méthodes alternatives de stockage ont été envisagées. L'option de stocker l'ammoniac sous forme gazeuse sous pression présente de nombreux inconvénients en termes de compacité et de sécurité de fonctionnement.

Une méthode privilégiée consiste en une absorption du gaz à l'intérieur d'un matériau, par exemple un sel, disposé dans une enceinte de stockage. Le stockage d'ammoniac est alors réalisé au sein du sel par la formation de complexe chimique du type ammoniacate. Les avantages de ce type de stockage par rapport à l'urée en solution aqueuse sont nombreux. Le stockage au sein d'un sel permet une réduction de masse et de volume du réservoir de stockage significative. Il permet également un bénéfice en termes de bilan CO₂ en raison de la diminution de la masse de réducteur à embarquer pour une autonomie en ammoniac donnée. On économise en effet la quantité d'eau additionnelle prévue pour diluer l'urée dans la configuration classique de la SCR, dite liquide. Par ailleurs, ce type de stockage permet de mettre en oeuvre une absorption de NOₓ à froid avec une efficacité plus élevée. Ce type de stockage assure de plus une réduction des coûts de fabrication car le système d'alimentation et injection de l'ammoniac peut être simplifié.

En pratique, l'ammoniac est injecté à l'échappement en continu dans les proportions stoechiométriques de la réaction de réduction de NOₓ. Il convient donc de pouvoir stocker à bord une quantité suffisante d'ammoniac. Pour limiter l'encombrement de l'enceinte de stockage, les constructeurs automobiles privilégient un remplissage ou un remplacement de l'enceinte de stockage, par exemple lors de la maintenance moteur, au moment de la vidange, ou lors d'un remplissage réservoir carburant. Selon les véhicules considérés (véhicules particuliers, poids lourds...) il est nécessaire de prévoir entre 10 et 100 opérations de remplissage ou remplacement pendant la durée de vie du véhicule.

Cette opération de maintenance périodique, nécessaire pour assurer une dépollution efficace des NOₓ pendant toute la vie du véhicule, fait l'objet de réglementations spécifiques dans les différents pays ou la technologie SCR est utilisée. Un point commun de toutes ces réglementations est la nécessité de pouvoir déterminer la quantité de réducteur restant dans l'enceinte de stockage pour pouvoir avertir le conducteur lorsqu'un remplissage doit être fait. Par exemple, dans la législation Européenne pour les véhicules particuliers, il est nécessaire de pouvoir mesurer deux seuils d'autonomie restante, respectivement à 2400km et 800km, ce qui correspond respectivement à environ trois pleins et un plein de carburant.

Un jaugeage est donc nécessaire dans le cas des systèmes de stockage et de délivrance d'ammoniac gazeux. Au-delà de l'exigence réglementaire, le jaugeage de l'ammoniac stocké est nécessaire à la gestion du système dans le cas où plusieurs enceintes de stockage sont intégrées dans le véhicule. En effet, pour simplifier l'intégration dans le véhicule, ou pour améliorer le fonctionnement du système de stockage (introduction d'une unité de démarrage à froid), le stockage est dans la plupart des cas réparti dans plusieurs enceintes de stockage. La gestion entre ces différentes enceintes de stockage nécessite de connaitre la quantité restante de d'ammoniac gazeux.

Une solution possible est de réaliser un jaugeage en sommant les commandes d'ammoniac appliquées au système de stockage et de délivrance ou des mesures débit d'ammoniac gazeux sortant du système.

Cependant, ces mesures manquent de précision. En particulier, pour ce type de jaugeage, les imprécisions de chaque adéquation entre la commande ou la mesure et la quantité réellement injectée s'ajoutent les unes aux autres.

Par ailleurs, la relativité de ces mesures implique des possibilités de leurrer le système pour que ce dernier considère par exemple qu'une enceinte vient d'être à nouveau remplie. Un procédé de jaugeage de l'autonomie d'un système de stockage de délivrance d'ammoniac gazeux est décrit dans le document WO 2012/034706 A1.

### Résumé de l'invention

Un but de l'invention est de fournir un jaugeage qui ne présente pas ces inconvénients.

A cet effet, il est prévu un procédé de jaugeage de l'autonomie d'un système de stockage et de délivrance d'ammoniac gazeux à une unité de consommation selon la revendication 1.

Le système comprenant :
- une cellule de stockage d'ammoniac gazeux comprenant un moyen de chauffage dédié, et
- au moins un capteur d'au moins un paramètre du système,
le procédé comprenant des étapes consistant à :
- piloter le système selon une consigne intrusive indépendante d'une demande en ammoniac de l'unité de consommation,
- au cours de l'étape de pilotage, réaliser une mesure intrusive de l'au moins un paramètre du système par le capteur, et
- comparer la mesure intrusive à une valeur seuil de l'au moins un paramètre dans les conditions de pilotage pour estimer l'autonomie du système par rapport à un seuil de remplissage de la cellule correspondant à la valeur seuil du paramètre.

L'invention est avantageusement complétée par les caractéristiques suivantes, prises seules ou en une quelconque de leurs combinaisons techniquement possibles :
- le système comprend un moyen de régulation de débit d'ammoniac gazeux vers l'unité de consommation, la consigne comprenant une consigne de débit et de chauffage,
- l'étape de pilotage intrusif comprend une première sous-étape consistant à piloter le système selon une consigne de débit nul et de pression constante de la cellule,
- l'étape de pilotage intrusif comprend une seconde sous-étape consistant à piloter le système par une consigne de débit maximal,
- l'au moins un paramètre mesuré par la mesure intrusive comprend une pression ou une température de la cellule,
- l'au moins un paramètre mesuré par la mesure intrusive comprend une puissance de chauffage de la cellule,
- le procédé comprend en outre les étapes consistant à :
   ∘ évaluer au moins une valeur caractéristique, et
   ∘ en fonction de l'au moins une valeur caractéristique évaluée :
      ▪ définir une fréquence de lancement des étapes de pilotage intrusif et de mesure intrusive, ou
      ▪ déclencher des étapes de pilotage intrusif et de mesure intrusive,
- le procédé comprend en outre les étapes consistant à :
   ∘ estimer une quantité d'ammoniac gazeux délivré par la cellule,
   ∘ calculer un taux de chargement de la cellule en ammoniac par intégration d'estimations de quantités d'ammoniac gazeux délivré, le taux de chargement étant une valeur caractéristique,
- le procédé comprend en outre une étape consistant à réinitialiser la valeur de taux de chargement de la cellule en ammoniac après remplacement d'une cellule de stockage par une celle de stockage saturée en ammoniac gazeux,
- le système comprend un capteur de débit, l'estimation de quantité d'ammoniac gazeux délivré étant réalisée par mesure de débit d'ammoniac gazeux par le capteur de débit,
- l'estimation de quantité d'ammoniac gazeux délivré est réalisée par intégration d'une commande de délivrance d'ammoniac gazeux du système,
- la valeur caractéristique au moins comprend :
   ∘ une pression moyenne en ammoniac gazeux du système sur une période donnée,
   ∘ une puissance moyenne de chauffage fournie à l'au moins une cellule sur une période donnée,
   ∘ un temps après un démarrage de l'unité de consommation,
   ∘ une longueur caractéristique du fonctionnement de l'unité de consommation sur une période donnée,
- le procédé comprend une étape consistant à filtrer et/ou moyenner la mesure intrusive avant l'étape de comparaison,
- le procédé comprend une étape consistant à calibrer la valeur seuil de la mesure intrusive en fonction de caractéristiques de la cellule de stockage,
- le procédé comprend une étape consistant à dégrader un mode de fonctionnement de l'unité de consommation et/ou du système de stockage suite à l'estimation d'un franchissement du seuil de remplissage pour diminuer la demande en ammoniac.

L'invention concerne également un système de stockage et de délivrance d'ammoniac gazeux à une unité de consommation selon la revendication 16. Le système comprenant :
- une cellule de stockage d'ammoniac gazeux comprenant un moyen de chauffage dédié,
- un moyen de régulation de débit d'ammoniac gazeux vers l'unité de consommation,
- un dispositif de commande comprenant :
   ∘ des moyens de commande du moyen de chauffage dédié et du moyen de régulation de débit d'ammoniac gazeux, et
   ∘ au moins un capteur d'au moins un paramètre du système,
le système étant adapté pour mettre en oeuvre un tel procédé.

### Brève description des figures

D'autres caractéristiques, buts et avantages de l'invention apparaitront lors de la description ci-après d'un mode de réalisation. Aux dessins annexés :
- la figure 1 représente schématiquement un moteur thermique équipé d'un système de post-traitement SCR
- la figure 2 représente schématiquement un système de stockage et d'alimentation en ammoniac selon un exemple de mode de réalisation de l'invention,
- la figure 3 illustre schématiquement un procédé de jaugeage de l'autonomie d'un système de stockage selon un exemple de mode de réalisation de l'invention,
- la figure 4 illustre le comportement d'une variable physique mesurée au cours d'une étape de mesure intrusive exemple procédé de jaugeage selon un mode de réalisation de l'invention
- la figure 5 illustre une étape de comparaison de mesure intrusive à un seuil d'un procédé de jaugeage selon un mode de réalisation de l'invention,
- la figure 6 représente une fonction de détection de conditions favorables pour le déclenchement d'étapes d'un procédé de jaugeage selon un mode de réalisation de l'invention,
- la figure 7 représente une évolution de pression et de débit d'ammoniac au cours d'une désorption en imposant une puissance constante de chauffage.

### Description détaillée de l'invention

### 1) Exemples illustrant un mode de réalisation du système

### a. Exemple illustrant un mode de réalisation de système de post-traitement SCR

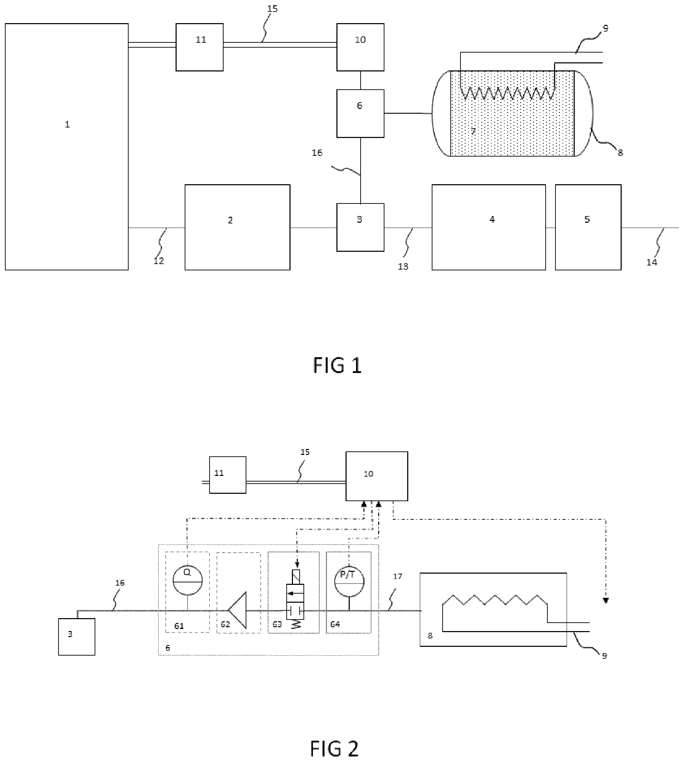

Sur la figure 1, on a représenté schématiquement un moteur thermique équipé d'un système de post-traitement SCR par injection d'ammoniac.

Un moteur 1 est piloté par un calculateur électronique 11. En sortie du moteur, des gaz d'échappement 12 sont dirigés vers un système de dépollution 2. Le système de dépollution 2 peut comprendre un catalyseur d'oxydation ou un catalyseur à trois voies. Le système de dépollution peut en outre comprendre un filtre à particules.

De l'ammoniac 16 est injecté au niveau d'un circuit d'échappement 100 du moteur et mélangé aux gaz d'échappement au moyen d'un module d'injection 3 disposé par exemple en aval de l'élément de dépollution 2 pour former un mélange ammoniac / gaz d'échappement 13. Le module d'injection 3 constitue ainsi une unité de consommation. Le mélange ammoniac / gaz d'échappement 13 traverse ensuite un catalyseur SCR 4 qui permet la réduction des NOx par l'ammoniac. Des éléments complémentaires de post-traitement 5 peuvent être positionnés après le catalyseur SCR. Les éléments complémentaires 5 peuvent comprendre un filtre à particules ou un catalyseur d'oxydation. Les gaz d'échappement se présentent ainsi sous une forme de gaz d'échappement dépollués 14 en sortie des éléments complémentaires 5. Les gaz d'échappement dépollués sont ensuite dirigés vers une sortie d'échappement 17. Ainsi l'échappement 100 comprend, disposés de l'amont, côté moteur 1, à l'aval, côté sortie 17, l'élément de dépollution 2, le module d'injection 3, le catalyseur SCR 4, et les éléments complémentaires 5.

Pour assurer une alimentation et un dosage de l'ammoniac 16 en entrée du module d'injection 3, le système comprend une enceinte ou cellule de stockage et d'alimentation en ammoniac 8 comprenant une enceinte de stockage d'ammoniac contenant une structure de stockage 7 pouvant être piloté en température par un dispositif de chauffage 9 ou de réchauffage. Le dispositif de chauffage 9 comprend par exemple une résistance électrique ou un échangeur de chaleur alimenté par un fluide caloporteur tel que le liquide de refroidissement moteur.

La structure de stockage 7 comprend un sel pulvérulent. Le principe du stockage d'ammoniac dans les sels, en particulier de type chlorure de métaux alcalino-terreux par chémisorption réversible est connu de l'homme du métier et n'est pas repris ici.

Le dispositif de chauffage 9 peut comprendre plusieurs modules chauffants (non représentés).

La cellule de stockage 8 est connectée à un dispositif 6 de contrôle en pression de l'enceinte et de dosage de l'ammoniac vers le module d'injection 3. Ce dispositif de contrôle de pression 6 peut être piloté par un contrôleur électronique dédié ou dispositif de commande 10 relié au calculateur électronique 11 du moteur.

Le système comprend ainsi un système de stockage et d'alimentation en ammoniac 200 comprenant, d'amont en aval dans le sens de circulation de l'ammoniac, la cellule de stockage 8, le dispositif de contrôle de pression 6, et le module d'injection 3 dans l'échappement 100.

Dans une configuration alternative non représentée, le dispositif de contrôle de pression 6 peut être directement piloté par le calculateur moteur 11.

### b. Exemple illustrant un mode de réalisation d'un système de stockage et d'alimentation

En référence à la figure 2, il est décrit un système de stockage et d'alimentation en ammoniac dont le dispositif de contrôle de pression 6 permet le pilotage en pression de l'enceinte et le dosage du débit d'ammoniac vers l'échappement.

La cellule de stockage 8 peut être en matière métallique, par exemple un alliage d'acier, ou en matière plastique, par exemple en un plastique composite. La cellule de stockage 8 peut être de géométries diverses connues de l'homme du métier. L'enceinte de stockage 8 est par exemple à symétrie de révolution.

Le dispositif de chauffage 9, ou de réchauffage est par exemple de type résistance électrique. Le dispositif de chauffage 9 peut alternativement comprendre un échangeur de chaleur de type solide/liquide, par exemple en utilisant de l'eau ou un lubrifiant moteur, ou solide/gaz, par exemple en utilisant des gaz d'échappement. Le dispositif de chauffage 9 peut être placé autour de l'enceinte de stockage 8 ou au coeur de la cellule de stockage 8, au sein du matériau de stockage de la structure de stockage 7.

Le système comprend au moins un capteur d'au moins un paramètre du système. Le ou les capteurs peuvent être inclus dans le dispositif de contrôle de pression 6 de contrôle en pression de l'enceinte et de dosage de l'ammoniac de pilotage en pression. Ainsi le dispositif de contrôle de pression 6 peut comprendre un capteur de gaz ou capteur de pression 64. Le capteur de pression 64 est par exemple un capteur de pression ou un capteur de température permettant de déterminer par calcul une pression du gaz ammoniac.

Le dispositif de contrôle de pression 6 peut comprendre un moyen de régulation de débit tel qu'un module de dosage de gaz 63. Le module de dosage de gaz 63 est par exemple de type électrovanne.

Le dispositif de contrôle de pression 6 peut inclure en outre un capteur de débit ou débitmètre gaz 61 permettant la mesure d'un débit d'ammoniac. Le débitmètre gaz 61 est par exemple disposé en aval du module de dosage de gaz 63 dans le sens d'écoulement du gaz vers l'unité de consommation 3.

Le dispositif de contrôle de pression 6 peut également comprendre un module 62 permettant d'atténuer les oscillations de pression en sortie du dispositif de dosage. Le module d'atténuation d'oscillations 62 est par exemple de type col sonique.

Le dispositif de chauffage 9 permet de libérer l'ammoniac stocké dans la cellule de stockage 8 par élévation de la température du matériau de stockage de la structure de stockage 7. La libération de l'ammoniac provoque une élévation de la pression au sein de la cellule de stockage 8.

Le dispositif de commande 10 peut comprendre des moyens de régulation de la pression mesurée au moyen du capteur de pression 64, via un pilotage approprié du dispositif de chauffage 9 de la structure de stockage 7. Lorsque une pression 17 suffisamment élevée et suffisamment stable est générée, le dispositif de commande, éventuellement bouclé sur le capteur de débit 61, permet de piloter l'injection d'ammoniac vers l'échappement selon le débit demandé.

Le débit et la pression d'ammoniac sont deux performances clés du système. Quel que soit le taux de chargement en ammoniac du matériau de la structure de stockage 7, en fonctionnement normal, le système doit pouvoir assurer un débit maximal suffisamment élevé, par exemple de l'ordre de 50 à 200mg/s d'ammoniac, pour une dépollution NOₓ efficace sur une large plage de fonctionnement du véhicule. Le système de stockage doit pouvoir assurer une pression suffisamment élevée, par exemple de l'ordre de 2 à 5 bars, pour permettre une injection et un mélange efficace de l'ammoniac avec les gaz d'échappement au niveau de l'unité de consommation 3.

Le matériau de stockage de la structure de stockage 7 doit présenter une bonne conductivité thermique pour limiter l'énergie à apporter pour monter en température et pression l'ensemble du matériau quel que soit le taux de chargement en ammoniac du matériau. Par ailleurs, le matériau doit avoir une perméabilité du gaz élevée pour assurer un débit d'ammoniac suffisant quel que soit le taux de chargement du matériau. Dans une mise en oeuvre privilégiée du matériau, un liant du type graphite naturel expansé pourra être ajouté au sel chlorure métallique.

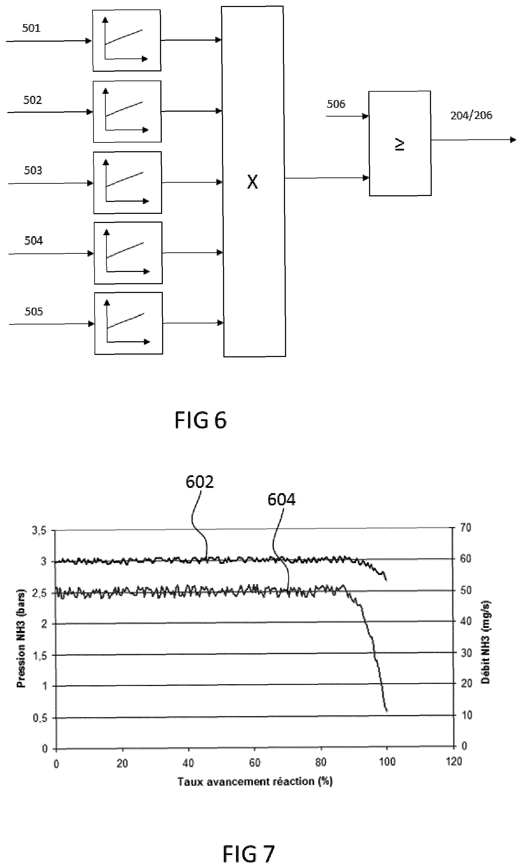

Cependant, quelle que soit la qualité de la mise en oeuvre, lorsque le matériau de stockage de la structure de stockage 7 se vide en ammoniac, il y a une diminution progressive du débit et de la pression maximaux jusqu'à épuisement de l'ammoniac stocké. Sur la figure 7 est représentée l'évolution de la pression, par la courbe de pression 602, et du débit, par la courbe de débit 604, d'ammoniac au cours d'une désorption en imposant une puissance constante de chauffage.

Lorsque le taux d'avancement de la réaction approche de 100%, c'est-à-dire que la cellule s'est vidée de son ammoniac, on observe un décrochement du débit maximal et de la pression maximale que peut fournir le système. Typiquement, ce décrochement intervient à partir d'un taux d'avancement de 80 à 90%.

### 2) Exemple illustrant un mode de réalisation de procédé

### a. Pilotage intrusif et mesure intrusive

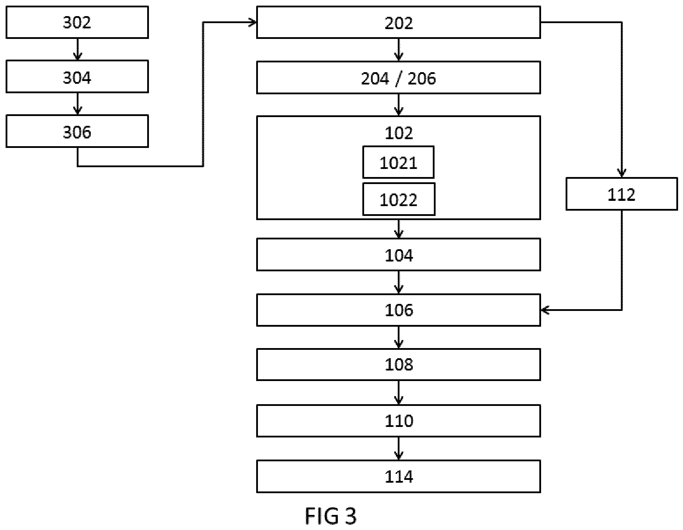

En référence à la figure 3, il est décrit un procédé de jaugeage de l'autonomie du système de stockage et de délivrance d'ammoniac gazeux à l'unité de consommation 3.

Le procédé comprend une première étape 102 consistant à piloter le système de stockage selon une consigne intrusive indépendante d'une demande en ammoniac de l'unité de consommation 3. Le pilotage est par exemple réalisé par le dispositif de commande 10.

Le système peut comprendre un moyen de régulation de débit 63 d'ammoniac gazeux vers l'unité de consommation 3, la consigne comprenant alors une consigne de débit et de chauffage.

Ainsi l'étape de pilotage intrusif 102 peut comprendre une première sous-étape 1021 consistant à piloter le système selon une consigne de débit nul et de pression constante de la cellule 8. La consigne de pression est par exemple proche de la consigne système, par exemple de l'ordre de 2 à 5 bars.

L'étape de pilotage peut comprendre une seconde sous-étape 1022 consistant à piloter le système par une consigne de débit maximal. Cette seconde sous-étape 1022 peut être réalisée lorsque les conditions du système définies par la consigne de la première sous-étape 1021 sont stables. Le débit de consigne peut correspondre au débit maximal de conception, par exemple de l'ordre de 50 à 200 mg/s. Dans le cas où l'autonomie restante est élevée, c'est-à-dire que l'avancement de la réaction est inférieur à 80%, la pression peut être maintenue à sa pression de consigne tout en assurant un débit correspondant au débit maximal. Dans le cas où l'autonomie restante approche de zéro, la pression ne peut être maintenue avec une ouverture du dispositif de dosage correspondant au débit maximal, même par augmentation de la puissance de chauffage. La pression chute, d'autant plus que l'autonomie est proche de zéro.

Le procédé comprend en outre une deuxième étape 104 consistant, au cours de l'étape de pilotage, à réaliser une mesure intrusive de l'au moins un paramètre du système par l'au moins un capteur, par exemple le débitmètre 61 ou le capteur de pression 64, sur une période donnée. L'au moins un paramètre mesuré par la mesure intrusive peut comprendre une pression ou une température de la cellule 8. Il est ainsi possible d'évaluer la pression et/ou le débit maximal d'ammoniac que peut fournir la cellule. L'au moins un paramètre mesuré par la mesure intrusive peut comprendre une puissance de chauffage de la cellule.

L'étape de mesure intrusive 104 est par exemple interrompue après une durée pouvant être calibrée. Plusieurs valeurs, par exemple deux, peuvent être conservées en mémoire et transmises à un module de décision du dispositif de commande 10. Il peut s'agir par exemple de la mesure de pression et de la puissance de chauffage lors de la fin de la mesure intrusive 104.

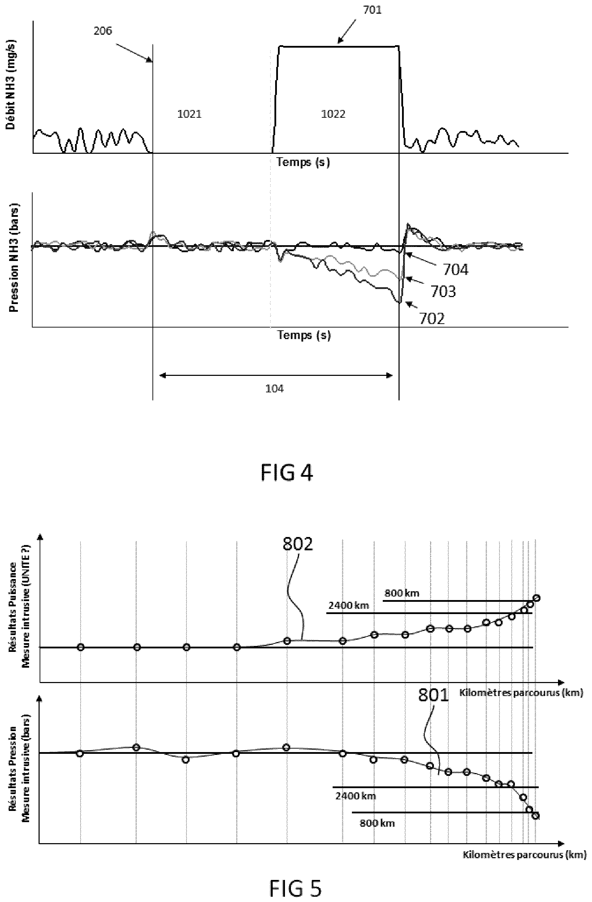

En référence à la figure 4, il est décrit un exemple de principe de fonctionnement du procédé de jaugeage. La courbe 701 représente l'évolution de la consigne de débit du système. La courbe 702, respectivement 703 et 704, représente la pression interne d'une cellule présentant un taux de remplissage de 5%, respectivement de 10% et supérieur à 20%.

Le pilotage intrusif 102 et la mesure intrusive 104 consistent ainsi à piloter le système dans des conditions qui permettent une évaluation de la quantité d'ammoniac stockée. La mesure intrusive vient donc interrompre le fonctionnement normal du système en impactant ponctuellement l'efficacité de dépollution NOₓ.

Le procédé comprend une troisième étape 106 consistant à comparer la mesure intrusive à une valeur seuil de l'au moins un paramètre dans les conditions de pilotage. En effet, à l'issue de l'étape de mesure intrusive 104 les valeurs mesurées sont transmises.

La comparaison permet alors de réaliser une quatrième étape 108 consistant à estimer précisément l'autonomie du système de stockage par rapport à un seuil de remplissage de la cellule de stockage 8 correspondant à la valeur seuil du paramètre.

Il est ainsi possible d'évaluer à tout instant l'ammoniac disponible dans le système et d'avertir le dispositif de commande 10, par exemple lorsque certains seuils d'autonomie critiques sont atteints.

Le procédé peut en outre comprendre une étape consistant à filtrer 110 et/ou moyenner la mesure intrusive avant l'étape de comparaison 106. Il est ainsi possible de retirer les valeurs incohérentes ou hors champ des mesures, par exemple les valeurs obtenues lors d'un arrêt moteur pendant la mesure intrusive 104.

Cette information pouvant être mis à profit pour alerter le conducteur. Le procédé peut également comprendre une étape 114 consistant à dégrader un mode de fonctionnement de l'unité de consommation et/ou du système de stockage et/ou basculer sur une autre cellule de stockage suite à l'estimation 108 d'un franchissement du seuil de remplissage pour diminuer la demande en ammoniac.

Le procédé peut de plus comprendre une étape consistant à calibrer 112 la valeur seuil de la mesure intrusive en fonction des caractéristiques de la cellule de stockage 8 évaluées.

En référence à la figure 5, les valeurs de pression et de puissance de chauffage mesurées lors de la mesure intrusive 104 sont filtrées avant d'être utilisées pour définir deux moyennes glissantes de pression 801 et de puissance de chauffage 802.

Pour la cellule de stockage 8 considérée, on définit par calibration des paliers de pression et puissance correspondant aux seuils critiques pour lesquels il est nécessaire de déclencher une action spécifique. Il s'agit par exemple, alerte conducteur à 2400km et 800km d'autonomie.

Selon les cas, un seul paramètre « pression mesure intrusive » ou « puissance mesure intrusive » ou les deux peuvent être utilisés pour décider du franchissement d'un seuil critique. Dans le cas où les deux paramètres sont utilisés, une décision logique comprenant une porte ET ou OU pourra être mise en oeuvre.

### b. Calcul du taux de chargement

Le procédé peut comprendre une étape 302 consistant à estimer une quantité d'ammoniac gazeux délivré par la cellule 8.

Le système 8 peut comprendre un capteur de débit, l'estimation 302 de quantité d'ammoniac gazeux délivré pouvant alors être réalisée par mesure de débit d'ammoniac gazeux vers l'unité de consommation 3 par le capteur de débit 61. Au cours de l'étape 304 les mesures de débit sont intégrées et le résultat soustrait à l'autonomie initiale.

Alternativement, l'estimation 302 de quantité d'ammoniac gazeux délivré peut être réalisée par intégration d'une commande de délivrance d'ammoniac gazeux du système issue du dispositif de commande 10.

Cette étape est suivie d'une étape 304 consistant à calculer le taux de chargement de la cellule 8 en ammoniac par intégration d'estimations de quantités d'ammoniac gazeux délivré. Dans ce cas, il est possible d'évaluer l'autonomie restante en ammoniac au moyen de deux stratégies simultanées et complémentaires : le calcul du taux de chargement d'après les étapes 302 et 304, et, périodiquement, l'étape de comparaison 106 après mesure intrusive 104 pour déterminer le franchissement ou non de seuils critiques d'autonomie.

Il est ainsi possible de disposer à tout instant d'une estimation de l'autonomie restante en ammoniac sous réserver de disposer d'une information fiable de la mise en place d'une nouvelle cellule ou d'un remplissage. Ainsi le procédé peut comprendre une étape 306 consistant, après remplacement d'une cellule de stockage par une celle de stockage saturée en ammoniac gazeux, à réinitialiser la valeur de taux de chargement de la cellule 8 en ammoniac.

### c. Lancement des étapes de pilotage et de mesure intrusifs

Le procédé peut comprendre une première étape préliminaire 202 consistant à évaluer au moins une valeur caractéristique.

Le procédé peut comprendre une deuxième étape préliminaire 204 consistant, en fonction de la valeur caractéristique évaluée, à définir une fréquence de lancement des étapes de pilotage intrusif et de mesure intrusive. Ainsi, à mesure que la cellule de stockage 8 se vide, la fréquence des mesures intrusives 104 demandées augmente.

Alternativement ou en complément, le procédé peut comprendre une troisième étape préliminaire 206 consistant, en fonction de la valeur caractéristique évaluée, à déclencher les étapes de pilotage intrusif 102 et de mesure intrusive 104.

La valeur caractéristique peut être le taux de chargement 501 de la cellule 8 en ammoniac calculé aux étapes 302 et 304.

Par ailleurs, la valeur caractéristique peut comprendre une pression moyenne 502 en ammoniac gazeux du système sur une période donnée pour favoriser le déclenchement de la mesure intrusive lorsqu'une pression de fonctionnement anormalement basse est mesurée. La valeur caractéristique peut comprendre une puissance moyenne de chauffage 503 fournie à l'au moins une cellule 8 sur une période donnée pour favoriser le déclenchement de la mesure intrusive lorsque l'autonomie restante approche de zéro. La valeur caractéristique peut comprendre un temps après un démarrage 504 de l'unité de consommation 3 pour favoriser le déclenchement de la mesure intrusive quelque temps après le démarrage du système pour s'assurer que le système est dans des conditions de fonctionnement stabilisées. La valeur caractéristique peut encore comprendre une longueur caractéristique 505 du fonctionnement de l'unité de consommation 3 sur une période donnée, telle qu'une vitesse moyenne du véhicule sur un nombre de kilomètres donné pour favoriser le déclenchement de la mesure intrusive lors d'une utilisation à vitesse soutenue correspondant à des conditions de débit et pression proche de leur valeur maximales, dans le but de limiter le coût énergétique et le coût en ammoniac de la mesure intrusive.

Comme illustré figure 6, qui illustre une définition fonctionnelle d'une fonction de détection de conditions favorables à la réalisation des étapes 204 et 206, la valeur caractéristique peut consister en un produit de caractéristiques telles que celles indiquées ci-avant. Ce produit est comparé à un seuil 506 afin de déterminer s'il faut réaliser les étapes de définition de période 204 ou de déclenchement 206 du pilotage intrusif et de la mesure intrusive.

Dans le cas où l'unité de consommation 3 est un véhicule, une analyse plus complexe des conditions de roulage pourra être mise en oeuvre, basée sur d'informations moteur plus nombreuses (régime moteur, couple, vitesse), permettant par exemple de définir un critère de roulage passé et présent, et pourra éventuellement être substituée aux informations temps après démarrage et vitesse moyenne véhicule.

La valeur caractéristique permet ainsi d'estimer si une mesure intrusive est nécessaire immédiatement ou doit être réalisée plus ou moins souvent. La valeur caractéristique peut ainsi consister en une estimation directe ou indirecte, par exemple relative, de la quantité d'ammoniac restant dans la cellule. La mesure intrusive permet alors de définir la quantité restante de manière précise par rapport à un seuil.

La ou les valeur(s) caractéristique(s) calculées permet(ent) de détecter des conditions favorables aux déclenchement de les étapes de pilotage intrusif 102 et de mesure intrusive 104.

## Revendications

1. Procédé de jaugeage de l'autonomie d'un système de stockage et de délivrance d'ammoniac gazeux à une unité de consommation (3), le système comprenant :
- une cellule de stockage (8) et d'alimentation en ammoniac comprenant un moyen de chauffage (9) dédié, la cellule de stockage comprenant une enceinte de stockage d'ammoniac contenant une structure de stockage (7), et
- au moins un capteur (61, 64) d'au moins un paramètre du système,
le procédé comprend des étapes consistant à :
- piloter (102) le système selon une consigne intrusive indépendante d'une demande en ammoniac de l'unité de consommation (3),
- au cours de l'étape de pilotage, réaliser (104) une mesure intrusive de l'au moins un paramètre du système par le capteur (61, 64), et
- comparer (106) la mesure intrusive à une valeur seuil de l'au moins un paramètre dans les conditions de pilotage pour estimer (108) l'autonomie du système par rapport à un seuil de remplissage de la cellule (8) correspondant à la valeur seuil du paramètre,
dans lequel la mesure intrusive vient interrompre le fonctionnement normal du système,
le procédé comprenant une étape consistant à filtrer (110) la mesure intrusive avant l'étape de comparaison, de sorte à retirer des valeurs obtenues lors d'un arrêt moteur pendant la mesure intrusive.

2. Procédé selon la revendication 1, **caractérisé en ce que** le système comprend un moyen de régulation de débit (63) d'ammoniac gazeux vers l'unité de consommation (3), la consigne comprenant une consigne de débit et de chauffage.

3. Procédé selon la revendication 2, **caractérisé en ce que** l'étape de pilotage intrusif (102) comprend une première sous-étape (1021) consistant à piloter le système selon une consigne de débit nul et de pression constante de la cellule (8).

4. Procédé selon l'une quelconque des revendications 2 ou 3, **caractérisé en ce que** l'étape de pilotage intrusif (102) comprend une seconde sous-étape (1022) consistant à piloter le système par une consigne de débit maximal.

5. Procédé selon l'une quelconque des revendications 1 à 4, **caractérisé en ce que** l'au moins un paramètre mesuré par la mesure intrusive comprend une pression ou une température de la cellule (8).

6. Procédé selon l'une quelconque des revendications 1 à 5, **caractérisé en ce que** l'au moins un paramètre mesuré par la mesure intrusive comprend une puissance de chauffage de la cellule.

7. Procédé selon l'une quelconque des revendications 1 à 6 comprenant en outre les étapes consistant à :
- évaluer (202) au moins une valeur caractéristique, et
- en fonction de l'au moins une valeur caractéristique évaluée :
∘ définir (204) une fréquence de lancement des étapes de pilotage intrusif et de mesure intrusive, ou
∘ déclencher (206) des étapes de pilotage intrusif (102) et de mesure intrusive (104).

8. Procédé selon la revendication 7, **caractérisé en ce qu'**il comprend en outre les étapes consistant à :
- estimer (302) une quantité d'ammoniac gazeux délivré par la cellule,
- calculer (304) un taux de chargement de la cellule (8) en ammoniac par intégration d'estimations de quantités d'ammoniac gazeux délivré, le taux de chargement étant une valeur caractéristique.

9. Procédé selon la revendication 8, **caractérisé en ce qu'**il comprend en outre une étape consistant à réinitialiser (306) la valeur de taux de chargement de la cellule (8) en ammoniac après remplacement d'une cellule de stockage par une celle de stockage saturée en ammoniac gazeux.

10. Procédé selon l'une quelconque des revendications 8 ou 9, **caractérisé en ce que** le système comprend un capteur de débit, l'estimation (302) de quantité d'ammoniac gazeux délivré étant réalisée par mesure de débit d'ammoniac gazeux par le capteur de débit (61).

11. Procédé selon l'une quelconque des revendications 8 à 10, **caractérisé en ce que** l'estimation (302) de quantité d'ammoniac gazeux délivré est réalisée par intégration d'une commande de délivrance d'ammoniac gazeux du système.

12. Procédé selon l'une quelconque des revendications 7 à 11, **caractérisé en ce que** la valeur caractéristique au moins comprend :
- une pression moyenne en ammoniac gazeux du système sur une période donnée,
- une puissance moyenne de chauffage fournie à l'au moins une cellule (8) sur une période donnée,
- un temps après un démarrage de l'unité de consommation (3),
- une longueur caractéristique du fonctionnement de l'unité de consommation (3) sur une période donnée.

13. Procédé selon la revendication 5 et/ou 6, dans lequel des valeurs de pression et/ou de puissance de chauffage mesurées lors de la mesure intrusive (104) sont filtrées avant d'être utilisées pour définir une ou plusieurs moyenne(s) glissante(s) de pression (801) et/ou de puissance de chauffage (802).

14. Procédé selon l'une quelconque des revendications 1 à 13, **caractérisé en ce qu'**il comprend une étape consistant à calibrer (112) la valeur seuil de la mesure intrusive en fonction de caractéristiques de la cellule de stockage (8).

15. Procédé selon l'une quelconque des revendications 1 à 14, **caractérisé en ce qu'**il comprend une étape consistant à dégrader (114) un mode de fonctionnement de l'unité de consommation et/ou du système de stockage suite à l'estimation (108) d'un franchissement du seuil de remplissage pour diminuer la demande en ammoniac.

16. Système de stockage et de délivrance d'ammoniac gazeux à une unité de consommation (3), le système comprenant :
- une cellule de stockage (8) et d'alimentation en ammoniac comprenant un moyen de chauffage (9) dédié, la cellule de stockage comprenant une enceinte de stockage d'ammoniac contenant une structure de stockage (7),
- un moyen de régulation de débit (63) d'ammoniac gazeux vers l'unité de consommation (3),
- un dispositif de commande (10) comprenant :
∘ des moyens de commande du moyen de chauffage (9) dédié et du moyen de régulation de débit (63) d'ammoniac gazeux, et
∘ au moins un capteur (61, 64) d'au moins un paramètre du système,
le système étant adapté pour mettre en oeuvre un procédé selon l'une quelconque des revendications 1 à 15.

## Patentansprüche

1. Verfahren zur Messung der Restkapazität eines Speicher- und Dosiersystems von gasförmigem Ammoniak an eine Verbrauchseinheit (3), wobei das System umfasst:
- eine Speicher- und Versorgungszelle (8) mit Ammoniak, umfassend ein spezielles Heizmittel (9), wobei die Speicherzelle einen Ammoniakspeicherbehälter umfasst, der eine Speicherstruktur (7) enthält, und
- mindestens einen Sensor (61, 64) mindestens eines Parameters des Systems,
wobei das Verfahren Schritte umfasst, die bestehen im:
- Steuern (102) des Systems gemäß einem Intrusionssollwert unabhängig von einer Ammoniakanforderung der Verbrauchseinheit (3),
- während des Steuerschritts, Durchführen (104) einer intrusiven Messung von dem mindestens einen Parameter des Systems durch den Sensor (61, 64), und
- Vergleichen (106) der intrusiven Messung mit einem Grenzwert des mindestens einen Parameter unter Steuerbedingungen, um die Restkapazität des Systems in Bezug zu einem Füllstandgrenzwert der Zelle (8) zu ermitteln (108), der dem Grenzwert des Parameters entspricht,
wobei die intrusive Messung den normalen Betrieb des Systems unterbricht,
wobei das Verfahren einen Schritt umfasst, der darin besteht, die intrusive Messung vor dem Vergleichsschritt zu filtern (110), um bei einem Motorstopp während der intrusiven Messung erhaltene Werte zu entnehmen.

2. Verfahren nach Anspruch 1, **dadurch gekennzeichnet, dass** das System ein Reguliermittel des Durchsatzes (63) von gasförmigem Ammoniak zur Verbrauchseinheit (3) umfasst, wobei der Sollwert einen Durchsatz- und Heizungssollwert umfasst.

3. Verfahren nach Anspruch 2, **dadurch gekennzeichnet, dass** der Schritt des intrusiven Steuerns (102) einen ersten Unterschritt (1021) umfasst, der darin besteht, das System gemäß einem Durchsatzsollwert Null und konstantem Drucksollwert der Zelle (8) zu steuern.

4. Verfahren nach einem der Ansprüche 2 oder 3, **dadurch gekennzeichnet, dass** der Schritt des intrusiven Steuerns (102) einen zweiten Unterschritt (1022) umfasst, der darin besteht, das Systems mit einem maximalen Durchsatzsollwert zu steuern.

5. Verfahren nach einem der Ansprüche 1 bis 4, **dadurch gekennzeichnet, dass** der mindestens einen durch die intrusive Messung gemessener Parameter einen Druck oder eine Temperatur der Zelle (8) umfasst.

6. Verfahren nach einem der Ansprüche 1 bis 5, **dadurch gekennzeichnet, dass** der mindestens einen durch die intrusive Messung gemessener Parameter eine Heizleistung der Zelle umfasst.

7. Verfahren nach einem der Ansprüche 1 bis 6, umfassend ferner die folgenden Schritte:
- Ermitteln (202) mindestens eines charakteristischen Werts, und
- in Abhängigkeit von dem mindestens einen ermittelten charakteristischen Wert:
∘ Festlegen (204) einer Startfrequenz der Schritte des intrusiven Steuerns und des intrusiven Messens, oder
∘ Auslösen (206) der Schritte des intrusiven Steuerns (102) und des intrusiven Messens (104).

8. Verfahren nach Anspruch 7, **dadurch gekennzeichnet, dass** es ferner die folgenden Schritte umfasst:
- Ermitteln (302) einer von der Zelle gelieferten Menge von gasförmigem Ammoniak,
- Berechnen (304) eines Füllstands der Zelle (8) mit Ammoniak durch Integration von Ermittlungen dosierter Mengen von gasförmigem Ammoniak, wobei der Füllstand ein charakteristischer Wert ist.

9. Verfahren nach Anspruch 8, **dadurch gekennzeichnet, dass** es ferner einen Schritt umfasst, der darin besteht, den Füllstandwert der Zelle (8) mit Ammoniak nach Ersatz einer Speicherzelle durch eine mit gasförmigem Ammoniak gesättigten Speicherzelle zu reinitialisieren (306).

10. Verfahren nach einem der Ansprüche 8 oder 9, **dadurch gekennzeichnet, dass** das System einen Durchsatzsensor umfasst, wobei die Ermittlung (302) von dosierter Menge von gasförmigem Ammoniak mittels Messung des Durchsatzes von gasförmigem Ammoniak durch den Durchsatzsensor (61) erfolgt.

11. Verfahren nach einem der Ansprüche 8 bis 10, **dadurch gekennzeichnet, dass** die Ermittlung (302) von dosierter Menge von gasförmigem Ammoniak durch Integration einer Dosierungssteuerung von gasförmigem Ammoniak des Systems erfolgt.

12. Verfahren nach einem der Ansprüche 7 bis 11, **dadurch gekennzeichnet, dass** der charakteristische Wert mindestens umfasst:
- einen durchschnittlichen Druck des gasförmigen Ammoniaks des Systems über einen bestimmten Zeitraum,
- eine der mindestens eine Zelle (8) über einen bestimmten Zeitraum bereitgestellten durchschnittlichen Heizleistung,
- eine Zeit nach einem Start der Verbrauchseinheit (3),
- eine charakteristische Länge des Betriebs der Verbrauchseinheit (3) über einen bestimmten Zeitraum.

13. Verfahren nach Anspruch 5 und/oder 6, wobei bei der intrusiven Messung (104) gemessene Druck- und/oder Heizleistungswerte gefiltert werden, bevor sie verwendet werden, um ein oder mehrere gleitende Durchschnitte von Druck (801) und/oder Heizleistung (802) festzulegen.

14. Verfahren nach einem der Ansprüche 1 bis 13, **dadurch gekennzeichnet, dass** es einen Schritt umfasst, der darin besteht, den Grenzwert der intrusiven Messung in Abhängigkeit von Merkmalen der Speicherzelle (8) zu kalibrieren (112).

15. Verfahren nach einem der Ansprüche 1 bis 14, **dadurch gekennzeichnet, dass** es einen Schritt umfasst, der darin besteht, einen Betriebsmodus der Verbrauchseinheit und/oder des Speichersystems infolge der Ermittlung (108) einer Überschreitung des Füllstandgrenzwerts zu drosseln (114), um die Ammoniakanforderung zu verringern.

16. Speicher- und Dosiersystem von gasförmigem Ammoniak an eine Verbrauchseinheit (3), wobei das System umfasst:
- eine Speicher- und Versorgungszelle (8) gasförmigen Ammoniaks, umfassend ein spezielles Heizmittel (9), wobei die Speicherzelle einen Ammoniakspeicherbehälter umfasst, der eine Speicherstruktur (7) enthält,
- ein Durchsatzreguliermittel (63) von gasförmigem Ammoniak zur Verbrauchseinheit (3),
- eine Steuervorrichtung (10), umfassend:
∘ Steuermittel des speziellen Heizmittels (9) und des Durchsatzreguliermittels (63) von gasförmigem Ammoniak, und
∘ mindestens einen Sensor (61, 64) mindestens eines Parameters des Systems,
wobei das System ausgebildet ist, um ein Verfahren nach einem der Ansprüche 1 bis 15 durchzuführen.

## Claims

1. A method for gauging the autonomy of a system for storing and delivering gaseous ammonia to a consumer unit (3), the system including:
- a cell for storing (8) and supplying with ammonia including a dedicated heating means (9), the storage cell including a storage chamber of ammonia containing a storage structure (7), and
- at least one sensor (61, 64) of at least one parameter of the system,
the method includes steps consisting in:
- controlling (102) the system according to an intrusive setting independent of an ammonia demand from the consumer unit (3),
- during the step of controlling, carrying out (104) an intrusive measurement of the at least one parameter of the system by the sensor (61, 64), and
- comparing (106) the intrusive measurement with a threshold value of the at least one parameter under the control conditions in order to estimate (108) the autonomy of the system with respect to a filling threshold of the cell (8) that corresponds to the threshold value of the parameter,
wherein the intrusive measurement interrupts the normal operation of the system,
the method including a step consisting in filtering (110) the intrusive measurement before the step of comparing, so as to remove values obtained during an engine stoppage during the intrusive measurement.

2. The method according to claim 1, **characterized in that** the system includes a means for regulating the flow (63) of gaseous ammonia to the consumer unit (3), with the setting including a flow and heating setting.

3. The method according to claim 2, **characterized in that** the step of intrusive control (102) includes a first sub-step (1021) consisting in controlling the system according to a zero flow rate and constant pressure setting of the cell (8).

4. The method according to any one of claims 2 or 3, **characterized in that** the step of intrusive control (102) includes a second sub-step (1022) consisting in controlling the system via a maximum flow rate setting.

5. The method according to any one of claims 1 to 4, **characterized in that** the at least one parameter measured by the intrusive measurement includes a pressure or a temperature of the cell (8).

6. The method according to any one of claims 1 to 5, **characterized in that** the at least one parameter measured by the intrusive measurement includes a heating power of the cell.

7. The method according to any one of claims 1 to 6 further including the steps consisting in:
- evaluating (202) at least one characteristic value, and
- according to the at least one characteristic value evaluated:
∘ defining (204) a frequency for launching the steps of intrusive control and of intrusive measurement, or
∘ triggering (206) steps of intrusive control (102) and of intrusive measurement (104).

8. The method according to claim 7, **characterized in that** it further includes the steps consisting in:
- estimating (302) a quantity of gaseous ammonia delivered by the cell,
- calculating (304) a load rate of the cell (8) with ammonia by integration of estimations of quantities of gaseous ammonia delivered, with the load rate being a characteristic value.

9. The method according to claim 8, **characterized in that** it further includes a step consisting in reinitializing (306) the load rate value of the cell (8) with ammonia after replacing a storage cell with a storage cell saturated with gaseous ammonia.

10. The method according to any one of claims 8 or 9, **characterized in that** the system includes a flow sensor, with the estimating (302) of the quantity of gaseous ammonia delivered being carried out by the measurement of the flow rate of gaseous ammonia by the flow sensor (61).

11. The method according to any one of claims 8 to 10, **characterized in that** the estimating (302) of the quantity of gaseous ammonia delivered is carried out by integration of a command for delivering gaseous ammonia of the system.

12. The method according to any one of claims 7 to 11, **characterized in that** the characteristic value at least includes:
- an average pressure in gaseous ammonia of the system over a given period,
- an average heating power supplied to the at least one cell (8) over a given period,
- a time after a starting of the consumer unit (3),
- a characteristic length of the operation of the consumer unit (3) over a given period.

13. The method according to claim 5 and/or 6, wherein pressure and/or heating power values measured during the intrusive measurement (104) are filtered before being used to define one or more sliding average(s) for pressure (801) and/or heating power (802).

14. The method according to any one of claims 1 to 13, **characterized in that** it includes a step consisting in calibrating (112) the threshold value of the intrusive measurement according to the characteristics of the storage cell (8).

15. The method according to any one of claims 1 to 14, **characterized in that** it includes a step of degrading (114) an operating mode of the consumer unit and/or of the system for storing following the estimate (108) of a crossing of the filling threshold in order to decrease the ammonia demand.

16. A system for storing and delivering gaseous ammonia to a consumer unit (3), the system including:
- a cell for storing (8) and supplying with ammonia including a dedicated heating means (9), the storage cell including a storage chamber of ammonia containing a storage structure (7),
- a means for regulating the flow rate (63) of gaseous ammonia to the consumer unit (3),
- a control device (10) including:
∘ means for controlling the dedicated heating means (9) and means for regulating the flow rate (63) of gaseous ammonia, and
∘ at least one sensor (61, 64) of at least one parameter of the system,
the system being adapted to implement a method according to any one of claims 1 to 15.
